# EUROPEAN PATENT SPECIFICATION

(11) **EP 3 040 566 B1**
(45) Date of publication and mention of the grant of the patent: **20.03.2019**
(21) Application number: 14840636.6
(22) Date of filing: 25.08.2014
(51) Int. Cl.: F16C 33/78, F16C 33/80, F16J 15/3232, F16J 15/3252, F16J 15/3268, B60B 27/00, F16C 19/18

(54) **BEARING SEALING DEVICE**
LAGERDICHTUNGSVORRICHTUNG
DISPOSITIF D'ÉTANCHÉITÉ DE ROULEMENT

(30) Priority: 26.08.2013 JP 2013174128
(43) Date of publication of application: 06.07.2016
(73) Proprietor: Uchiyama Manufacturing Corp., Okayama-shi, Okayama 702-8004 (JP)
(72) Inventor: SHIBAYAMA, Masanori, Akaiwa-shi Okayama 701-2221 (JP)
(74) Representative: Sajda, Wolf E.
(86) International application number: PCT/JP2014/072096
(87) International publication number: WO 2015/029921

(56) References cited:
- DE-A1- 10 163 068
- JP-A- 2008 281 013
- JP-A- 2010 060 127
- JP-A- 2010 121 645
- JP-A- 2013 047 527

## Description

### Technical Field

The present invention relates to a bearing sealing device, for instance, used for a bearing device of a wheel supporting portion of a vehicle. More specifically, the present invention relates to a bearing sealing device mounted between an inner ring on a hub flange side and an outer ring of the bearing device in which the inner ring with the hub flange is supported axially rotatable to the outer ring.

### Background Art

Recently, a hub bearing has been widely used as a bearing device of a wheel supporting portion of a vehicle (e.g. referring to Patent Literatures 1 and 2). The hub bearing is constituted in such a manner that an inner ring with a hub flange, to which a wheel is attached, is supported axially rotatable to an outer ring fixed to a body of the vehicle. The bearing sealing device for preventing intrusion of sludge and the like into a bearing space or for preventing leakage of grease or the like filled in the bearing space is mounted on both end portions of the outer ring and the inner ring in the axial direction.

The bearing sealing device on a hub flange side (an outer side) of a bearing device for the wheel shown in Patent Literatures 1 and 2 is constituted with a core member fitted to an inner diametrical portion of an outer ring, and an elastic member (a seal lip member) fixed to the core member and having a plurality of seal lips elastically contacting a flange face including a hub wheel and a rising face of the hub flange.

Patent Literatures 1 and 2 disclose a core member having a cylindrical portion fitted to the inner diametrical portion of the outer ring, an outer flange portion which extends into an outer diametrical direction from one end, on an opposite side to the bearing space, of the cylindrical portion, and an inner flange portion which extends into an inner diametrical direction from the other end, on a bearing space side, of the cylindrical portion.

Such bearing sealing devices are packed, stored, shipped, and conveyed in such a state that a plurality of bearing sealing devices are concentrically stacked in the axial direction. When the bearing sealing devices are stacked and packed in such a state that the seal lip (an axial lip in particular) contacts an adjacent bearing sealing device, deformation of the seal lip sometimes occurs during storage and conveyance.

The seal lip is frequently packed with lubricant such as the grease applied, the grease adheres and transfers to the adjacent sealing device because of the contact, and necessary application amount of the grease to the seal lip may not be obtained. Therefore, Patent Literatures 1 and 2 show an example of a structure such that the seal lip does not contact or interfere with the adjacent sealing device when the plurality of sealing devices are stacked as mentioned above.

In other words, in Patent Literatures 1 and 2, the inner flange portion of the core member has a curve portion (an inverting portion 2b in Patent Literature 1, or a distal end portion 33 in Patent Literature 2) formed so as to fold back from the other end of the cylindrical portion. An inner diametrical side section of the curve portion (a second cylindrical portion in Patent Literature 1, or a bending portion in Patent Literature 2) is formed so as to largely overlap the cylindrical portion (a cylindrical portion in Patent Literature 1, or a fitting cylindrical portion in Patent Literature 2) seen in a diametrical direction.

When the bearing sealing devices are stacked as mentioned above, only a protrusion end portion of the curve portion abuts on the adjacent sealing device, the inner diametrical side section of the curve portion ensures a large space portion between the adjacent bearing sealing devices, and the seal lip is located in the space portion.

Thereby, the plurality of bearing sealing devices are stacked along the axial direction so that the seal lip does not contact or interfere with the adjacent bearing sealing device (respectively referring to FIG. 2 in Patent Literature 1, and FIG. 6 in Patent Literature 2).

Patent Literature 3 relates to a sealing device having a side lip, in which, when a plurality of such sealing devices are stacked on one another, an interference between the side lips is effectively suppressed. This sealing device is installed on one of two members rotating relative to each other and slidably in intimate contact with the other member. The sealing device is constructed by combining a mounting ring fitted on the one member and a rubber-like elastic body put on the mounting ring, and has the side lips slidably in intimate contact with the other member by the rubber-like elastic body molded thereon. The mounting ring has a cylindrical part in a position fitted on the peripheral surface of the one member. The rubber-like elastic body has a rubber step part arranged on one axial side of the cylindrical part. The cylindrical part and the rubber step part have a positional relationship where, when the plurality of sealing devices are stacked on one another, on the rubber step part of one sealing device, the cylindrical part of the upper sealing device is mounted, and also have a dimensional relationship where the side lips of the one sealing device then do not interfere with the upper sealing device.

Patent Literature 4 relates to improving sealability of a sealing member and prevent an increase in sliding resistance in a rolling bearing device.

Patent Literature 5 relates to a bearing seal for a wheel to reduce a torque by preventing grease applied on a seal lip from being peeled due to contact with an adjoining seal, and reducing a sliding resistance of a seal when the seal is laminated in the axial direction.

### List of Citations

### Patent Literature

Patent Literature 1: Japanese Patent No. JP 5 170 369 B2
Patent Literature 2: Japanese Unexamined Patent Application Publication JP 2012-131 452 A.
Patent Literature 3: JP 2008 281013 A discloses the features of the preamble of claim 1.
Patent Literature 4: JP 2010 060127 A
Patent Literature 5: JP 2010 121645 A

### Summary of the Invention

### Technical Problem

As mentioned above, the inner flange portion of the core member is formed with deep bending processing of the curve portion to obtain the above-mentioned space portion. On producing the core member, there are difficulties in obtaining dimensional accuracy of the cylindrical portion fitted to the inner diametrical portion of the outer ring and the difficulties decrease a yield rate of the core member as semi-finished product. Particularly, since the cylindrical portion is integrally fitted to the inner diametrical portion of the outer ring, dispersion of fitting strength values affects assembly property to the outer ring, fitting stability, and seal function of the bearing sealing device.

In order that the bearing sealing device is constituted in such a manner that the protrusion end portion of the curve portion abuts on the adjacent sealing device, a region for abutting the protrusion end portion needs to be obtained by building up the inner diametrical section of the one end, on the opposite side to the bearing space, of the cylindrical portion and a section on an axial direction side with constituent material of the seal lip member such as rubber material.

Since the curve portion is formed so as to continuously bend into the inner diametrical side from the cylindrical portion, the protrusion end portion which directly abuts as mentioned above is located on the inner diametrical side further than an extension portion of the cylindrical portion along the axial direction. Therefore, to obtain an abutting portion by building-up as mentioned above (hereinafter referred to as a build-up portion) becomes inevitable.
When the build-up portion is obtained as mentioned above, on mounting the sealing device on the bearing device, the seal lip (the axial lip) elastically contacts the hub flange, deforms in the outer diametrical direction, and approaches the build-up portion. A region in which the axial lip is formed needs to be shifted into the inner diametrical side so that the axial lip does not interfere with the build-up portion and it is less flexible to design the axial lip due to space limit on the inner diametrical side.

The present invention is proposed in view of the above-mentioned problems. An object of the present invention is to provide a bearing sealing device by which mutual interference between the seal lips or the like does not occur when a plurality of bearing sealing devices are stacked in the axial direction while fitting accuracy of the core member to the outer ring is maintained and the flexibility in design is also ensured.

### Solution to the Problem

A bearing sealing device of the present invention is characterized in that the bearing sealing device is provided with a core member and a seal lip member which is made of elastic material; the core member has a cylindrical portion fitted to an inner diametrical portion of an outer ring of a bearing device, an outer flange portion which extends into an outer diametrical direction from one end of the cylindrical portion, the one end being an opposite side to a bearing space, and an inner flange portion which extends into an inner diametrical direction from another end of the cylindrical portion, the other end being on a bearing space side; the seal lip member includes an axial lip fixed to the core member and projecting into the opposite side to the bearing space side from the inner flange portion.

The inner flange portion of the core member extends so as to bend into an inner diametrical side through a curve portion from the other end of the cylindrical portion. The curve portion is provided with a protrusion portion made of elastic material and extending into the bearing space side.

The protrusion portion is adapted to function in such a manner that, when a plurality of bearing sealing devices are concentrically stacked in an axial direction, the protrusion portion abuts on an adjacent bearing sealing device and the bearing sealing device and the adjacent bearing sealing device do not contact each other at a region other than an abutting region of the adjacent bearing sealing device.

In the present invention, the protrusion portion functions in such a manner that, when the plurality of bearing sealing devices of the present invention are concentrically stacked in the axial direction, the protrusion portion abuts on the adjacent bearing sealing device and the bearing sealing device and the adjacent bearing sealing device do not contact each other at the region other than the abutting region of the adjacent bearing sealing device.

Owing to a spacer function as mentioned above, the axial lip does not contact the adjacent bearing sealing device and is not deformed during storage and conveyance when the plurality of bearing sealing devices are stacked. Since a grease or the like does not adhere to the adjacent bearing sealing device even when it is applied to the axial lip, the bearing sealing device is not soiled and expected application amount of the grease or the like does not decrease.

The protrusion portion is formed at the curve portion of the inner flange portion of the core member so as to extend into the bearing space side, a forming region of the axial lip, namely a space where the axial lip is formed, is widely obtained in a section, on an opposite side to the bearing space, from the inner flange portion to the outer flange portion. In particular in the above-mentioned kind of core member, although a limited space between the inner flange portion and the cylindrical portion is set as the forming region of the axial lip, the forming region of the axial lip does not become narrow since the protrusion portion having the spacer function is not provided at the space.

Thereby, flexibility in seal design, in particular in design of the axial lip, is expanded. When the bearing sealing device is assembled in the bearing device, the axial lip is deformed into an outer diametrical side and approaches a cylindrical portion side of the core member. A space for deformation of the axial lip as above is obtained large enough to expand the flexibility in design so as not to contact the cylindrical portion and the like by deformation.

The protrusion portion, formed of elastic material, is more easily formed in an optimum shape than in the prior art in which the core member is formed to bend and has the same spacer function as mentioned above. In particular, since the abutting region of the protrusion portion to the adjacent bearing sealing device is located on the outer diametrical side as far as possible, the forming region of the axial lip becomes easily obtained.

In the present invention, an inner diametrical side section of the curve portion of the inner flange portion can be formed so as to overlap the cylindrical portion in a diametrical direction.

In the present invention, the spacer function as mentioned above is effectively exerted by the extension width of the protrusion portion into the bearing space side and the length (bending depth) of a section in which the inner diametrical side section of the curve portion and the cylindrical portion are overlapping in the diametrical direction.

Owing to the protrusion portion, the design of the core member is only focused on strength and fitting force of the cylindrical portion to the inner diametrical portion of the outer ring and the length of the overlapping section is reduced. Thereby, strong fitting force of the cylindrical portion to the inner diametrical portion of the outer ring is achieved.

When the length of the overlapping section is large, a spring deformation easily occurs and strut force of the inner flange portion to the cylindrical portion is weakened, thereby weakening the fitting force of the cylindrical portion to the inner diametrical portion of the outer ring.

In the present invention, a face of the inner flange portion, the face being on the opposite side to the bearing space side, and an inner diametrical face of the cylindrical portion can be covered with a seal lip base portion constituting the seal lip member, and the axial lip can be formed so as to project from the seal lip base portion.

In the present invention, the face, on the opposite side to the bearing space side, of the inner flange portion and the inner diametrical face of the cylindrical portion are covered with the seal lip base portion, thereby being protected and enlarging the forming region of the axial lip. When a face, on an opposite side to the bearing space side, of the outer flange portion is further covered with the seal lip base portion, the core member is protected more accurately and the forming region of the axial lip is further enlarged.

Even in such a case, there is no need for more thickness of the seal lip base portion also covering the face, on the opposite side to the bearing space side, of the outer flange portion since the above-mentioned spacer function is exerted by adjusting the extension width of the protrusion portion.

In the present invention, the protrusion portion can be continuously provided along a circumferential direction of the core member or can be intermittently provided along the circumferential direction of the core member.

In the present invention, when the protrusion portion is continuously formed, the protrusion portion is in an annular shape and the stacking state of the bearing sealing device along the axial direction becomes stable. And when the protrusion portion is intermittently formed, less elastic material is used, thereby contributing to cost reduction and weight reduction of the bearing sealing device.

In the present invention, the protrusion portion is provided so as to overlap the cylindrical portion in the axial direction.

In the present invention, since the protrusion portion is provided on an outermost diametrical side in the curve portion, a space on the inner diametrical side is largely obtained and the flexibility in design of the axial lip is expanded.

In the present invention, the protrusion portion is provided so as to overlap in the axial direction the seal lip base portion covering the inner diametrical face of the cylindrical portion.

In the present invention, since the protrusion portion comes closer to the inner diametrical side than the cylindrical portion of the core member, the protrusion portion is unlikely to interfere with fitting when the cylindrical portion is fitted to the inner diametrical portion of the outer ring, thereby smoother fitting is achieved.

In the present invention, a face of the inner flange portion, the face being on the bearing space side, is covered with the seal lip base portion constituting the seal lip member, and the protrusion portion is integrally formed with the seal lip base portion.
In the present invention, since the protrusion portion is integrally formed with the seal lip base portion constituting the seal lip member, the protrusion portion and the seal lip member are collectively formed by molding, thereby the bearing sealing device is easily and effectively produced.

In the present invention, the protrusion portion can be formed so as to abut on a region in which the outer flange portion of the adjacent bearing sealing device is formed. In the present invention, when the plurality of bearing sealing devices are stacked along the axial direction, the protrusion portion is stably abutted on the adjacent bearing sealing device, thereby the spacer function is effectively exerted.

### Advantageous Effects of the Invention

The present invention provides a bearing sealing device in which mutual interference between the seal lips or the like does not occur when a plurality of bearing sealing devices are stacked in the axial direction while fitting accuracy of the core member to the outer ring is maintained and the flexibility in design is ensured.

### Brief Description of the Drawings

- FIG. 1: is a longitudinal sectional view schematically showing one example of a bearing device, to which the bearing sealing device of the present invention can be applied.
- FIG. 2: is an enlarged view of a part X in FIG. 1 and shows one embodiment of the bearing device of the present invention.
- FIG. 3: is a longitudinal sectional view showing the state in which the bearing sealing devices of the embodiment are stacked in the axial direction.
- FIG. 4: is a perspective view schematically showing one example of the protrusion portion of the bearing sealing device of the present invention and only shows the protrusion portion in a state of looking up the bearing sealing device in FIG. 3 from a lower side of FIG. 3.
- FIG. 5: is similar to FIG. 4 and shows another example of the protrusion portion.
- FIG. 6: is similar to FIG. 3 and shows another embodiment of the bearing sealing device of the present invention.
- FIG. 7: is similar to FIG. 3 and further shows another embodiment of the bearing sealing device of the present invention.

### Description of Embodiments

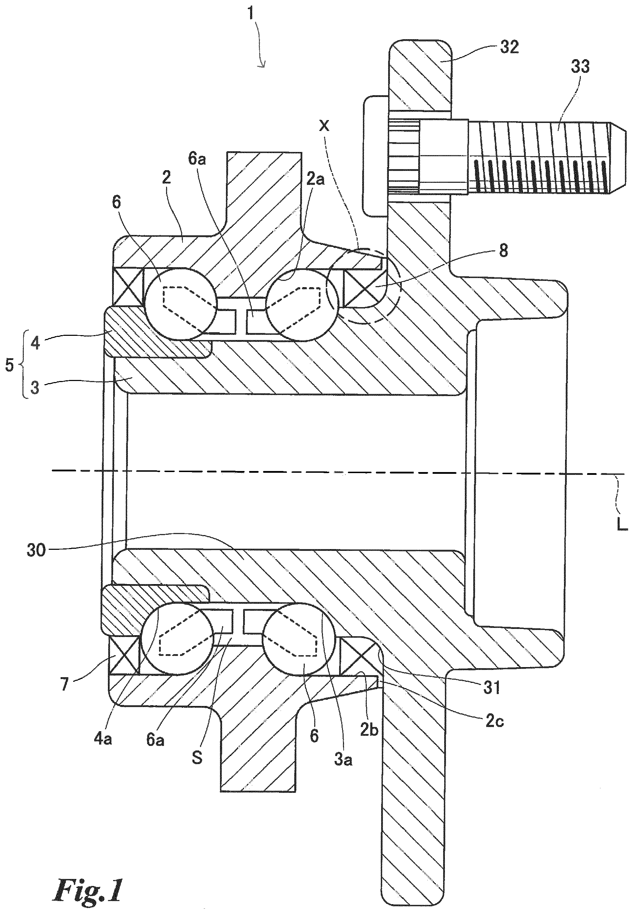

An embodiment of the present invention is explained below based on the drawings. FIG. 1 shows a bearing device 1 supporting a wheel of a vehicle (not shown) in an axially rotatable manner. The bearing device 1 is generally constituted with an outer ring 2 as an outer member, a hub wheel 3, an inner ring member 4 integrally fitted to a vehicle body side of the hub wheel 3, and two rows of rolling elements (balls) 6... interposed between the outer ring 2 and the hub wheel 3, and between the outer ring 2 and the inner ring member 4.

In the embodiment, an inner ring 5, i.e. an inner member, is constituted by the hub wheel 3 and the inner ring member 4. The outer ring 2 is fixed to a body of the vehicle (not shown). A drive shaft (not shown) is coaxially spline-fitted to the hub wheel 3. The inner ring 5, i.e. the hub wheel 3 and the inner ring member 4, is rotatable around a shaft L relative to the outer ring 2, the outer ring 2 and the inner ring 5 constitute two relatively rotating members, and an annular space S is formed between the two members. In the annular space S, in a state in which the two rows of rolling elements 6... are retained by a retainer 6a, a bearing ring 2a of the outer ring 2, a bearing ring 3a of the hub wheel 3, and a bearing ring 4a of the inner ring member 4 are rotatably interposed.

The hub wheel 3 includes a hub wheel body 30 in a cylindrical shape and a hub flange 32 formed so as to extend outward in a diametrical direction through a rising base portion 31 from the hub wheel body 30; the wheel is attached and fixed to the hub flange 32 by a bolt 33 and a nut (not shown). In the specification below, a side facing the wheel along a shaft L direction, i.e. a side facing a right side in FIG. 1, is referred to as a wheel side; a side facing the vehicle body, i.e. a side facing a left side in FIG. 1, is referred to as a vehicle body side.

On both end portions of the annular space S, hereinafter referred to as a bearing space, along the shaft L, bearing seals 7, 8 are mounted between the outer ring 2 and the hub wheel 3 and between the outer ring 2 and the inner ring member 4, thereby sealing the end portions of the bearing space S along the shaft L. Thus, intrusion of sludge and the like into the bearing space S and leakage of lubricant such as grease filled in the bearing space S to the outside are prevented.

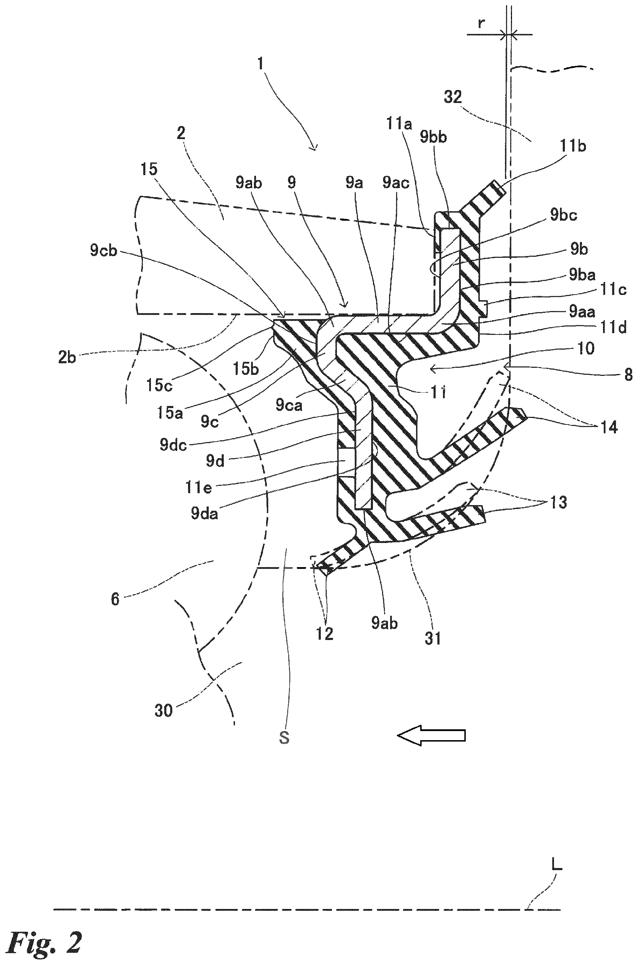

Of the bearing seals 7, 8, the bearing seal 8 on the wheel side is equivalent to the bearing sealing device of the present invention. An embodiment of the bearing seal 8 (bearing sealing device) is explained also referring to Fig. 2 to Fig. 5. The bearing seal 8 in the figure includes a core member 9 fitted to an inner diametrical portion 2b, i.e. an inner circumferential portion, of the outer ring 2, and a seal lip member 10 made of rubber (elastic material) and fixed to the core member 9.

The core member 9 includes a cylindrical portion 9a fitted to the inner diametrical portion 2b of the outer ring 2. The core member 9 also includes an outer flange portion 9b extending into an outer diametrical direction from one end 9aa, on an opposite side (the wheel side) to the bearing space S side, of the cylindrical portion 9a.

The core member 9 further includes an inner flange portion 9d extending and bending into an inner diametrical side through a curve portion 9c bending so as to fold back from the other end 9ab, on a bearing space S side (the vehicle body side), of the cylindrical portion 9a. An inner diametrical side section 9ca of the curve portion 9c is formed at a position overlapping the cylindrical portion 9a in the diametrical direction (a direction orthogonal to the shaft L).

The seal lip member 10 is constituted with a seal lip base portion 11 fixed to the core member 9 and as mentioned below a plurality of seal lips is provided so as to project from the seal lip base portion 11.

The seal lip base portion 11 covers a face 9ba, on an opposite side to the bearing space S side, of the outer flange portion 9b, an inner diametrical face 9ac of the cylindrical portion 9a, and a face 9da (also including a face, on an opposite side to the bearing space S side, of the curve portion 9c), on an opposite side to the bearing space S side, of the inner flange portion 9d. The seal lip base portion 11 further wraps around an end edge portion on inner diametrical side 9db of the inner flange portion 9d and covers a face 9dc on the bearing space S side and a face 9cb on the bearing space S side of the curve portion 9c. The seal lip base portion 11 has seal lips 12, 13, 14 projecting so as to elastically contact an outer circumferential face (a face facing the bearing space S side) of the hub wheel 3.

Among the seal lips 12, 13, 14, the seal lip 12 is a radial lip which elastically contacts the outer circumferential face of the hub wheel body 30 in the cylindrical shape and the seal lips 13, 14 are axial lips (side lips) which elastically contact a face from a rising base portion 31 to a hub flange 32 on the bearing space S side. In FIG. 2, seal lips 12, 13, 14, illustrated with two-dot chain lines, show a state in which the seal lips 12, 13, 14 elastically contact the outer circumferential face of the hub wheel 3 and are deformed.

The seal lip 12 can be such that it elastically contacts the rising base portion 31.

The seal lip base portion 11 has a wraparound portion 11a formed so as to wrap around an end edge portion on outer diametrical side 9bb of the outer flange portion 9b and to cover a part of a face 9bc on the bearing space S side. A section reaching the wraparound portion 11a has an eave lip portion 11b extending in expanding diameter and formed adjacent to the hub flange 32 of the hub wheel 3.

In the seal lip base portion 11 covering the outer flange portion 9b, a projecting portion 11c is formed so as to seize a protrusion portion 15 mentioned below and to prevent from mutually sliding in the diametrical direction when a plurality of bearing seals 8 are concentrically stacked along the shaft L direction as mentioned below. The projecting portion 11c in the figure is formed continuously in an annular shape around the shaft L and can be formed intermittently around the shaft L.

A surface in a prescribed width of the seal lip base portion 11 along a section of the projecting portion 11c on an inner circumferential side is an abutting region 11d on which the protrusion portion 15 of the bearing seal 8 abuts when the bearing seals 8 are stacked. Accordingly, the prescribed width is necessary for the protrusion portion 15 to abut on the abutting region 11d.

The seal lip base portion 11 covering a face on the bearing space S side of the inner flange portion 9d is fixed so as to cover a section reaching the face 9cb on the bearing space S side of the curve portion 9c. In the section covering the face 9cb on the bearing space S side of the curve portion 9c, the protrusion portion 15 extending on the bearing space S side along the shaft L direction is integrated with the seal lip base portion 11. The protrusion portion 15 is integrally molded with the seal lip member 10 by the same rubber material.

Specifically, after the core member 9 has been arranged in a cavity of a prescribed metal mold (both are not shown), unvulcanized rubber material is molded by pressure-vulcanization (by compression) or injected in the cavity and vulcanization-molded (injection-molded), thereby the seal lip member 10 in a prescribed shape is molded in such a manner that the seal lip member 10 is integrally fixed to the core member 9.

The seal lip base portion 11 in the figure includes a concave portion 11e, and the concave portion 11e is formed corresponding to a projecting portion (not shown) formed in the metal mold to maintain the core member 9 in a prescribed position of the cavity and is formed in a plurality of places along a circumferential direction.

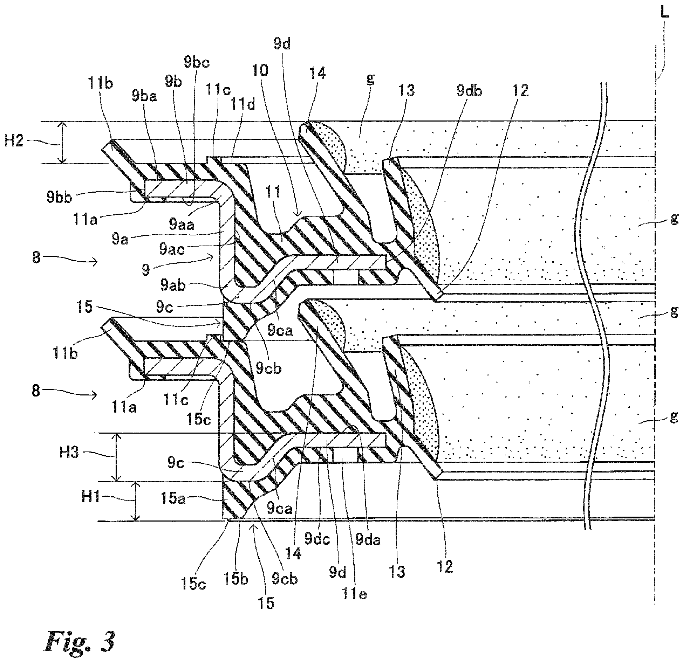

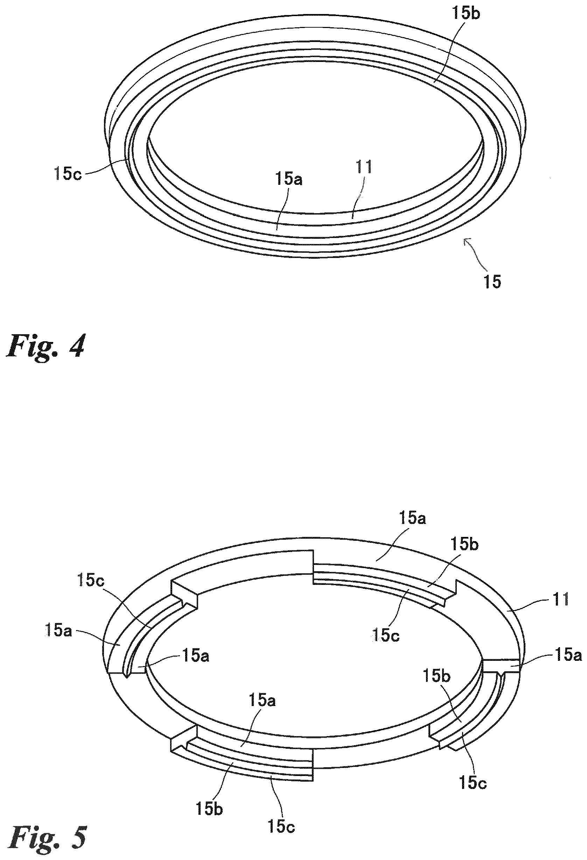

The protrusion portion 15 of the bearing seal 8 in the embodiment is continuously (annularly) formed along a circumferential direction of the core member 9 as shown in FIG. 3 and FIG. 4. The protrusion portion 15 comprises a base stand portion 15a of which a cross section fixed to the curve portion 9c of the core member 9 with the seal lip base portion 11 is substantially in a trapezoidal shape, and further comprises a flat protrusion end portion 15b corresponding to an upper side portion of the trapezoidal shape. The flat protrusion end portion 15b may have a small projection 15c configured with a triangular cross-section.

In FIG. 3 and FIG. 4, the small projection 15c is continuously and annularly formed along the protrusion end portion 15b in the circumferential direction and can be intermittently formed in the circumferential direction. The small projection 15c of the protrusion portion 15 in the embodiment is located in an extension of the cylindrical portion 9a of the core member 9 along the shaft L direction and is formed at a position in which the protrusion portion 15 materially overlaps the cylindrical portion 9a in the shaft L direction (referring to FIG. 2). FIG. 5 shows another embodiment of the protrusion portion 15 intermittently formed along the circumferential direction of the core member 9.

In the embodiment, as shown in FIG. 3, the protrusion portion 15 is formed so as to abut on a region in which the outer flange portion 9b of the adjacent bearing sealing device (bearing seal) 8 is formed. Specifically, the protrusion portion 15 is formed so as to abut on the abutting region 11d of the adjacent bearing seal 8.

The bearing seal 8 constituted as above is packed and stored in such a state that a plurality of bearing seals 8 are concentrically stacked along the shaft L direction. The bearing seals 8 are shipped and conveyed to an assembly plant of the bearing device 1. FIG. 3 shows part of the above-mentioned state in which a plurality of bearing seals 8 are stacked. In the figure, grease "g" is applied to a tip portion of the inner diametrical side portion of the axial lip 14 and an inner diametrical side section from the axial lip 13 to the radial lip 12.

In this state, the bearing seals 8 are mutually stacked so that the protrusion end portion 15b of the protrusion portion 15 abuts on the abutting region 11d of the adjacent bearing seal 8. On stacking in order in such a manner that the protrusion end portion 15b of the protrusion portion 15 abuts on the abutting region 11d, the protrusion portion 15 brings out a spacer function, thereby the plurality of bearing seals 8 are stacked without contacting each other in a region other than the abutting region 11d.

As the protrusion portion 15 brings out the spacer function, deep bending processing to the core member is not required as compared with such a case that the core member itself exerts the spacer function as shown in the above-mentioned prior art. The protrusion height H1 of the protrusion portion 15 from the curve portion 9c along the shaft L direction is desired to be greater than the protrusion height H2 of the axial lip 14 with the greatest protruding degree to the opposite side to the bearing space S.

The protrusion height H2 refers to a distance along the shaft L direction between a distal end of the axial lip 14 and a surface of the seal lip base portion 11 covering the face, on an opposite side to the bearing space S side, of the outer flange portion 9b.

The protrusion height H1 is thus made greater than the protrusion height H2, thereby the length H3 of an overlapping section of the inner diametrical side section 9ca of the curve portion 9c and the cylindrical portion 9a along the shaft L direction becomes smaller than that in the embodiment shown in the above-mentioned prior art.

As the curve portion 9c is formed without the deep bending processing, in terms of producing the core member 9, dimensional accuracy of the cylindrical portion 9a fitted to the inner diametrical portion 2b of the outer ring 2 is obtained, dispersion of dimensional accuracy of the core member 9 as semi-finished products decreases, and the yield rate of the core member 9 is improved.

As the length H3 (the length of the overlapping section of the inner diametrical side section 9ca of the curve portion 9c and the cylindrical portion 9a along the shaft direction) is able to be smaller, accordingly the length of the cylindrical portion 9a is able to be smaller. Thereby, strong fitting force of the cylindrical portion 9a to the inner diametrical portion 2b of the outer ring is obtained.

When the length H3 of the overlapping section is great, a spring deformation easily occurs and a strut force of the inner flange portion 9d to the cylindrical portion 9a is weakened, thereby deteriorating the fitting force of the cylindrical portion 9a to the inner diametrical portion 2b of the outer ring. As the length H3 is able to be smaller, accordingly the length of the cylindrical portion 9a is also able to be smaller and an outside diameter is able to be smaller when stamping out a base form of the core member 9 from steel plate, thereby the number (a material yield rate) obtained from steel plate is improved.

Dispersion of fitting strength values of the cylindrical portion 9a to the inner diametrical portion 2b of the outer ring 2 is unlikely to occur, thereby satisfactory maintaining assembly property and fitting stability of the bearing seal 8 to the bearing device 1 as shown in FIG. 1 or seal function of the sealing device is achieved.

When the protrusion height H1 is smaller than the protrusion height H2, the spacer function of the protrusion portion 15 is exerted by making the length H3 greater and the deep bending processing to the core member as shown in the embodiment of the above-mentioned prior art is not required.

At the time of stacking the bearing seals 8 as mentioned above, the small projection 15c formed in the protrusion portion 15 is interposed between the protrusion end portion 15b of the protrusion portion 15 and the abutting region 11d in a compression state. When the rubber members abut on each other, in case of vertical stacking, cumulative weight of the plurality of bearing seals 8 loads on the abutting portion, blocking (adhesion) between rubber members occurs and work of unstacking the bearing seals 8 separately becomes complicated.

Therefore, an abutting area is made smaller with the small projection 15c interposed between the protrusion end portion 15b and the abutting region 11d, thereby easing blocking force. As the abutting region 11d is formed at the prescribed width along the section of the projecting portion 11c on the inner circumferential side, the abutting of the protrusion portion 15 to the abutting region 11d is accurately performed.

In the abutting state, the projecting portion 11c is provided on the outer diametrical side of the protrusion portion 15; regulating act of the projecting portion 11c, being locked by the protrusion portion 15 to the projecting portion 11c, prevents mutual displacement of the bearing seals 8 along the diametrical direction.

When the protrusion portion 15 is continuously formed along the circumferential direction of the core member 9 as shown in the embodiment of FIG. 3 and FIG. 4, the stacking state of the bearing seals 8 along the shaft L direction becomes stable. As shown in the embodiment of FIG. 5, when the protrusion portion 15 is intermittently formed along the circumferential direction, less rubber is used, thereby effectively reducing weight and cost, and easing blocking force between rubber members as mentioned above.

In the embodiment, since a projection which brings out the spacer function as the protrusion portion 15 is not provided on an outer flange portion 9b side, the axial lip 14 does not contact the projection by elastic deformation at the time of mounting on the bearing device 1 as shown in FIG. 1. Therefore, a forming region of the axial lips 14, 13 is largely obtained and the flexibility in design of the axial lips 14, 13 is expanded in anticipation of the elastic deformation.

In the core member 9 of the embodiment, a limited space between the inner flange portion 9d and the cylindrical portion 9a is set as the forming region of the axial lip 14. As the protrusion portion 15 having the spacer function is not provided at the space, the forming region of the axial lip 14 does not become narrow. Thereby, flexibility in seal design, in particular in design of the axial lips 14, 13, is expanded.

In the embodiment, as the protrusion portion 15 is formed at the position overlapping the cylindrical portion 9a in the shaft L direction, the abutting region 11d of the protrusion portion 15 is provided for a positon along the shaft L direction of the cylindrical portion 9a. Thereby, it is not required that a build-up portion of the seal lip base portion 11 should be formed on an inner diametrical side of the cylindrical portion 9a and the abutting region 11d should be provided at the build-up portion.

Therefore, there is no worry that the space for formation of the seal lip 14 becomes narrow due to the build-up portion. As the protrusion portion 15 is integrally formed with the seal lip member 10 by the rubber material, the protrusion portion 15 is more easily formed in an optimum shape as compared with the prior art in which the core member is formed to bend and has the same spacer function as mentioned above.

In particular when the core member is formed to bend and has the same spacer function as mentioned above, the protrusion end portion of the curve portion is in a circular arc shape and it is inevitable for a center of the abutting region to be on the inner diametrical side further than the cylindrical portion. However, the abutting region of the protrusion portion 15 to the adjacent bearing seal 8 is able to be located on the outer diametrical side as far as possible, thereby the forming region of the axial lip becomes easily obtained.

In the figure, although the grease "g" is applied to the respective seal lips 13, 14, 15, the grease "g" does not adhere to the adjacent bearing seal 8 when a plurality of bearing seals 8 are stacked. Thereby, there is no worry that the prescribed application amount of the grease "g" decreases and the adjacent bearing seal 8 is soiled with the grease "g".

The plurality of bearing seals 8, stacked and packed as mentioned above, are conveyed to the assembly plant of the bearing device, are unpacked, and are unstacked one by one. And the bearing seal 8 is assembled to the bearing device 1 as shown in Fig. 1 and FIG. 2. On assembling, a jig (not shown) is applied to the seal lip base portion 11 covering the outer flange portion 9b from a wheel side opening of the outer ring 2, and the cylindrical portion 9a of the core member 9 is fitted to the inner diametrical portion 2b of the outer ring 2 in such a manner that the protrusion portion 15 becomes a tip side (referring to a void arrow in FIG. 2).

The fitting is performed in such a manner that the wraparound portion 11a of the seal lip base portion 11 abuts on a wheel side end face 2c of the outer ring 2. The rolling elements 6... are arranged in the bearing ring 2a of the outer ring 2 in such a state that the rolling elements 6... are retained by the retainer 6a, the hub wheel 3 is fitted to a prescribed position, and the inner ring member 4 and the bearing seal 7 on the vehicle body side are mounted in prescribed positions, thereby completing the assembly of the bearing device 1 with the bearing seal 8 assembled.

In the assembled state of the bearing seal 8, the wraparound portion 11a is interposed in the compression state between the wheel side end face 2c of the outer ring 2 and the face 9bc on the bearing space S side of the outer flange portion 9b of the core member 9.

Thereby, intrusion of muddy water and the like into a fitting portion between the inner diametrical portion 2b of the outer ring 2 and the cylindrical portion 9a of the core member 9 is prevented, generation of rust in a metal fitting portion is prevented, and intrusion of sludge and the like into the bearing space S through the fitting portion is prevented. The respective seal lips (the radial lip 12 and the axial lips 13, 14) are deformed and elastically contact the outer circumferential face of the hub wheel 3 as shown by the two-dot chain lines of FIG. 2. The eave lip portion 11b is adjacent to the hub flange 32 and forms a labyrinth "r".

Therefore, in an operation state in which the inner ring 5 (the hub wheel 3 and the inner ring member 4) rotates around the shaft L, intrusion of sludge and the like flowing along a flange face of the hub flange 32 into the bearing seal 8 is prevented by the labyrinth "r". Even when part of the sludge intrudes into the bearing seal 8 from the labyrinth "r", as the axial lips 14, 13 slidably contact the flange face of the hub flange 32 in a state of elastic contact, further intrusion is prevented by the sliding contact portion.

Leakage of the grease (not shown) filled in the bearing space S is also prevented since the radial lip 12 slidably contacts the hub wheel body 30 in a state of elastically contacting the hub wheel body 30. As mentioned above, in such a case that the grease "g" is applied to the respective seal lips 12, 13, 14 in advance, seal function of the seal lips 12, 13, 14 is more effectively exerted, slide resistance is eased, and rotational torque is reduced.

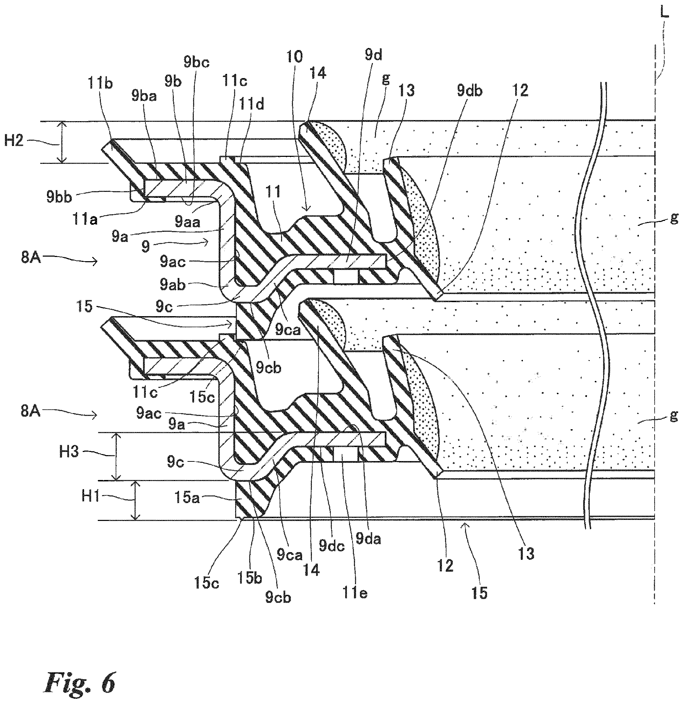

FIG. 6 shows another embodiment of the bearing sealing device of the present invention. In a bearing seal 8A (bearing sealing device) in the embodiment, the protrusion portion 15 is provided at a position slightly closer to the inner diametrical side than the bearing seal 8 in the above-mentioned embodiment. Namely, in the embodiment, the protrusion portion 15 is formed materially in the shaft L direction at a position which overlaps a section in which the seal lip base portion 11 covers the inner diametrical face 9ac of the cylindrical portion 9a of the core member 9.

In such a case, the small projection 15c of the protrusion portion 15 is located in an extension of the section in which the seal lip base portion 11 covers the inner diametrical face 9ac of the cylindrical portion 9a along the shaft L direction. Accordingly, the projecting portion 11c and the abutting region 11d which in a similar manner prevent the mutual displacement along the diametrical direction are also provided at the position slightly closer to the inner diametrical side.

In the embodiment, the forming region of the axial lip 14 and the like becomes slightly narrow since the protrusion portion 15 is slightly closer to the inner diametrical side; the forming region of the axial lip is obtained like the above-mentioned embodiment by reducing thickness of the protrusion portion 15 in the diametrical direction.

On the other hand, as the protrusion portion 15 is slightly close to the inner diametrical side, the bearing seal 8A in the embodiment is fitted to the outer ring 2 in the bearing device 1 as shown in FIG. 1 as above in such a manner that the protrusion portion 15 does not contact the inner diametrical portion 2b of the outer ring 2.

Thereby, the protrusion portion 15 is unlikely to interfere with fitting and smoother fitting is achieved. Other structures and effects are the same as the above-mentioned embodiment, common portions are allotted with the same reference numerals and their explanation is omitted here.

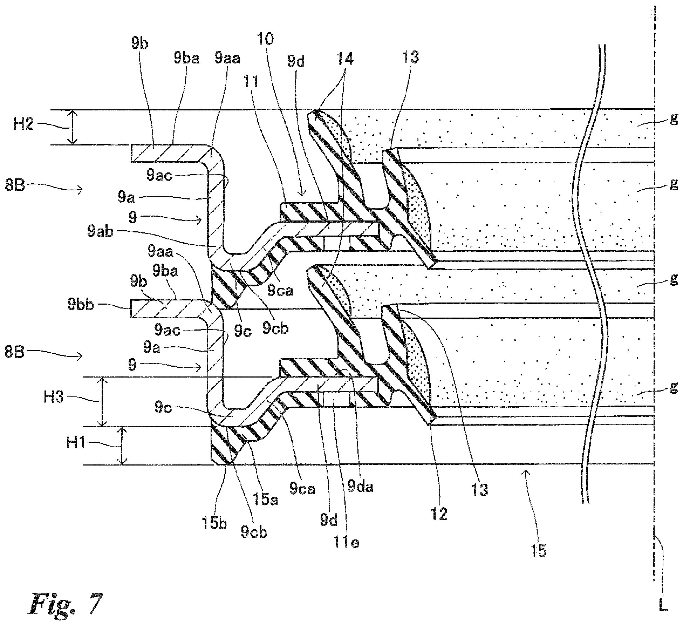

FIG. 7 further shows another embodiment of the bearing sealing device of the present invention. A bearing seal 8B (bearing sealing device) in the embodiment differs from the above-mentioned respective embodiments in that a section reaching the face 9ba, on the opposite side to the bearing space S side, of the outer flange portion 9b from the inner diametrical face 9ac of the cylindrical portion 9a of the core member 9 is not covered with the seal lip base portion 11.

Therefore, the wraparound portion 11a, the eave lip portion 11b, the projecting portion 11c, and the abutting region 11d as in the above-mentioned embodiment are not provided for the seal lip base portion 11. The protrusion portion 15 of the bearing seal 8B in the embodiment is provided at a position overlapping the cylindrical portion 9a of the core member 9 in the shaft L direction.

In the embodiment, as shown in FIG. 7, the protrusion portion 15 is formed so as to abut on a region in which the outer flange portion 9b of the adjacent bearing sealing device (bearing seal) 8B is formed like FIG. 3. Specifically, the protrusion portion 15 is formed so as to directly abut on the outer flange portion 9b of the adjacent bearing seal 8B.

When the plurality of bearing seals 8B are concentrically stacked along the shaft L direction, the protrusion end portion 15b of the protrusion portion 15 abuts on the one end 9aa of the cylindrical portion 9a of the core member 9 of the adjacent bearing seal 8B. The abutting portion is the one end 9aa of the cylindrical portion 9a and has an R-shaped face which continues to the outer flange portion 9b and forms a part of the face 9ba on the opposite side to the bearing space S side. In such an abutting state, as the above-mentioned embodiments, other regions are formed so as not to contact the adjacent bearing seal 8B.

In the embodiment, the eave lip portion 11b in the above-mentioned embodiment can be formed with the wraparound portion 11a separately from the seal lip base portion 11.

Other structures are the same as the above-mentioned embodiment, common portions are allotted with the same reference numerals and the explanation for the other structures is omitted here.

While the above embodiment includes one piece of the radial lip 12, and two pieces of the axial lips 13, 14 as the seal lip, the present invention is not limited to such an aspect and the present invention can be applied as long as the embodiment includes one piece of the axial lip as the seal lip. Although the eave lip portion 11b is adjacent to the hub flange 32 and forms the labyrinth "r", the eave lip portion 11b can be formed to elastically contact the hub flange 32 in the same manner with the axial lips 13, 14. The core member 9 can be formed in such a manner that the outer flange portion 9b further extends and bends into an outer diametrical side portion of the outer ring 2. The above are appropriately chosen and adopted according to a product specification.
A sectional shape and an entire shape of the protrusion portion 15 are not limited to those in the figure and can be other shapes as long as the spacer function is sufficiently exerted. In such a case that the small projection 15c is not provided or is intermittently formed along the circumferential direction as shown in FIG. 5, intervals and number of the protrusion portion 15 are appropriately adopted in view of the spacer function.
The bearing device 1 is not limited to the one in the figures and the bearing sealing device of the present invention is also applicable to a bearing device for a driven wheel or other bearing devices of the same type.

### List of Reference Signs

- 1: bearing device
- 2: outer ring
- 2b: inner diametrical portion
- 8: bearing seal (bearing sealing device)
- 9: core member
- 9a: cylindrical portion
- 9aa: one end of cylindrical portion
- 9ab: other end of cylindrical portion
- 9ac: inner diametrical face of cylindrical portion
- 9b: outer flange portion
- 9c: curve portion
- 9ca: inner diametrical side section of curve portion
- 9d: inner flange portion
- 9da: face of inner flange portion on opposite side to bearing space S
- 9dc: face n bearing space side
- 10: seal lip member
- 11: seal lip base portion
- 11d: abutting region
- 14: axial lip
- 15: protrusion portion
- S: bearing space
- L: shaft

## Claims

1. A bearing sealing device (8) comprising a core member (9) and a seal lip member (10) which is made of elastic material, the core member (9) comprising a cylindrical portion (9a) adapted to be fitted to an inner diametrical portion (2b) of an outer ring (2) of a bearing device (1), an outer flange portion (9b) which extends into an outer diametrical direction from one end of the cylindrical portion (9aa) which, when the bearing seal device is fitted to a bearing device, is positioned on an opposite side to a bearing space (S) side, and an inner flange portion (9d) which extends into an inner diametrical direction from another end of the cylindrical portion (9ab) which, when the bearing seal device is fitted to a bearing device, is positioned on a bearing space (S) side, the seal lip member (10) comprising an axial lip (14) fixed to the core member (9) and projecting, when the bearing seal device is fitted to a bearing device, into the opposite side to the bearing space (S) side from the inner flange portion (9d), wherein the inner flange portion (9d) of the core member (9) extends so as to bend into an inner diametrical side through a curve portion (9c) from the other end of the cylindrical portion (9ab),
**characterized in that** the curve portion (9c) is provided with a protrusion portion (15) made of elastic material and extending, when the bearing seal device is fitted to a bearing device, into the bearing space (S) side, and **in that** the protrusion portion (15) is adapted to function in such a manner that, when a plurality of bearing sealing devices (8) are concentrically stacked in an axial direction, the protrusion portion (15) abuts on an adjacent bearing sealing device (8) and the bearing sealing device (8) and the adjacent bearing sealing device (8) do not contact each other at a region other than an abutting region (11d) of the seal lip member (10) of the adjacent bearing sealing device (8),
wherein the protrusion portion (15) comprises a base stand portion (15a) of which a cross section is substantially in a trapezoidal shape, and a flat protrusion end portion (15b) corresponding to an upper side portion of the trapezoidal shape.

2. The bearing sealing device (8) according to claim 1,
**characterized in that** the protrusion end portion (15b) is provided with a small projection (15c).

3. The bearing sealing device (8) according to any one of claims 1 to 2, **characterized in that** an inner diametrical side section of the curve portion (9ca) of the inner flange portion (9d) is formed at a position overlapping the cylindrical portion (9a) in a diametrical direction.

4. The bearing sealing device (8) according to any one of claims 1 to 3, **characterized in that** a face of the inner flange portion on the opposite side to the bearing space side (9da) and an inner diametrical face of the cylindrical portion (9ac) are covered with a seal lip base portion (11) constituting the seal lip member (10), and the axial lip (14) is formed so as to project from the seal lip base
portion (11).

5. The bearing sealing device (8) according to any one of claims 1 to 4, **characterized in that** the protrusion portion (15) is continuously provided along a circumferential direction of the core member (9).

6. The bearing sealing device (8) according to any one of claims 1 to 4, **characterized in that** the protrusion portion (15) is intermittently provided along the circumferential direction of the core member (9).

7. The bearing sealing device (8) according to any one of claims 1 to 6, **characterized in that** the protrusion portion (15) is provided at a position overlapping the cylindrical portion (9a) in the axial direction.

8. The bearing sealing device (8) according to claim 4,
**characterized in that** the protrusion portion (15) is provided at a position overlapping in the axial direction the seal lip base portion (11) covering the inner diametrical face of the cylindrical portion (9ac).

9. The bearing sealing device (8) according to any one of claims 1 to 8, **characterized in that** a face of the inner flange portion on the bearing space side (9dc) is covered with the seal lip base portion (11) constituting the seal lip member (10), and the protrusion portion (15) is integrally formed with the seal lip base portion (11).

10. The bearing sealing device (8) according to any one of claims 1 to 9, **characterized in that** the protrusion portion (15) is formed so as to abut on a region in which the outer flange portion (9b) of the adjacent bearing sealing device (8) is formed.

## Patentansprüche

1. Lagerdichtung (8), die ein Kernelement (9) und ein Dichtlippenelement (10) aufweist, das aus einem elastischen Material hergestellt ist, wobei das Kernelement (9) Folgendes aufweist: einen zylindrischen Bereich (9a), der dazu ausgebildet ist, an einem inneren diametralen Bereich (2b) eines äußeren Rings (2) einer Lagereinrichtung (1) angebracht zu werden, einen äußeren Flanschbereich (9b), der sich in einer äußeren diametralen Richtung von dem einen Ende des zylindrischen Bereichs (9aa) erstreckt, der dann, wenn die Lagerdichtung an einer Lagereinrichtung angebracht ist, auf einer Seite angeordnet ist, die einer Seite eines Lagerraums (S) gegenüberliegt, und einen inneren Flanschbereich (9d), der sich in einer inneren diametralen Richtung von dem anderen Ende des zylindrischen Bereichs (9ab) erstreckt, der dann, wenn die Lagerdichtung an einer Lagereinrichtung angebracht ist, auf einer Seite eines Lagerraums (S) angeordnet ist, wobei das Dichtlippenelement (10) eine axiale Lippe (14) aufweist, die an dem Kernelement (9) befestigt ist und die, wenn die Lagerdichtung an einer Lagereinrichtung angebracht ist, von dem inneren Flanschbereich (9d) in die Seite ragt, die der Seite des Lagerraums (S) gegenüberliegt,
wobei der innere Flanschbereich (9d) des Kernelements (9) sich derart erstreckt, dass er sich durch einen Kurvenbereich (9c) an eine innere diametrale Seite biegt, und zwar von dem anderen Ende des zylindrischen Bereichs (9ab), **dadurch gekennzeichnet,**
**dass** der Kurvenbereich (9c) mit einem Vorsprungsbereich (15) aus einem elastischen Material ausgestattet ist und sich, wenn die Lagerdichtung an einer Lagereinrichtung angebracht ist, in die Seite des Lagerraums (S) erstreckt, und dass der Vorsprungsbereich (15) derart ausgebildet ist, dass er derart funktioniert, dass dann, wenn eine Vielzahl von Lagerdichtungen (8) konzentrisch in axialer Richtung gestapelt sind, der Vorsprungsbereich (15) an einer benachbarten Lagerdichtung (8) anliegt und die Lagerdichtung (8) und die benachbarte Lagerdichtung (8) einander nicht in einem anderen Bereich als einem Anlagebereich (11d) des Dichtlippenelements (10) der benachbarten Lagerdichtung (8) berühren,
wobei der Vorsprungsbereich (15) einen Basisstandbereich (15a), dessen Querschnitt im Wesentlichen in einer Trapezform ausgebildet ist, und einen flachen Vorsprungsendbereich (15b) aufweist, der einem oberen Seitenbereich der Trapezform entspricht.

2. Lagerdichtung (8) nach Anspruch 1,
**dadurch gekennzeichnet,**
**dass** der Vorsprungsendbereich (15b) mit einer kleinen Erhebung (15c) ausgestattet ist.

3. Lagerdichtung (8) nach einem der Ansprüche 1 bis 2,
**dadurch gekennzeichnet,**
**dass** ein innerer diametraler Seitenabschnitt des Kurvenbereichs (9ca) des inneren Flanschbereichs (9d) an einer Position angeordnet ist, die den zylindrischen Bereich (9a) in einer diametralen Richtung überlappt.

4. Lagerdichtung (8) nach einem der Ansprüche 1 bis 3,
**dadurch gekennzeichnet,**
**dass** eine Fläche des inneren Flanschbereichs auf der Seite, die der Seite (9da) des Lagerraums gegenüberliegt, und eine innere diametrale Fläche des zylindrischen Bereichs (9ac) mit einem Dichtlippen-Basisbereich (11) bedeckt sind, der das Dichtlippenelement (10) bildet,
und **dass** die axiale Lippe (14) derart ausgebildet ist, dass sie von dem Dichtlippen-Basisbereich (11) vorsteht.

5. Lagerdichtung (8) nach einem der Ansprüche 1 bis 4,
**dadurch gekennzeichnet,**
**dass** der Vorsprungsbereich (15) kontinuierlich entlang einer Umfangsrichtung des Kernelements (9) ausgebildet ist.

6. Lagerdichtung (8) nach einem der Ansprüche 1 bis 4,
**dadurch gekennzeichnet,**
**dass** der Vorsprungsbereich (15) intermittierend entlang der Umfangsrichtung des Kernelements (9) ausgebildet ist.

7. Lagerdichtung (8) nach einem der Ansprüche 1 bis 6,
**dadurch gekennzeichnet,**
**dass** der Vorsprungsbereich (15) an einer Position angeordnet ist, die den zylindrischen Bereich (9a) in axialer Richtung überlappt.

8. Lagerdichtung (8) nach Anspruch 4,
**dadurch gekennzeichnet,**
**dass** der Vorsprungsbereich (15) an einer Position angeordnet ist, die den Dichtlippen-Basisbereich (11) in axialer Richtung überlappt, der die innere diametrale Fläche des zylindrischen Bereichs (9ac) bedeckt.

9. Lagerdichtung (8) nach einem der Ansprüche 1 bis 8,
**dadurch gekennzeichnet,**
**dass** eine Fläche des inneren Flanschbereichs auf der Seite (9dc) des Lagerraums mit dem Dichtlippen-Basisbereich (11) bedeckt ist, der das Dichtlippenelement (10) bildet,
und **dass** der Vorsprungsbereich (15) integral mit dem Dichtlippen-Basisbereich (11) ausgebildet ist.

10. Lagerdichtung (8) nach einem der Ansprüche 1 bis 9,
**dadurch gekennzeichnet,**
**dass** der Vorsprungsbereich (15) derart ausgebildet ist, dass er an einen Bereich anliegt, an dem der äußere Flanschbereich (9b) der benachbarten Lagerdichtung (8) ausgebildet ist.

## Revendications

1. Dispositif d'étanchéité (8) pour palier comprenant un élément de noyau (9) et un élément formant lèvre d'étanchéité (10) qui est réalisé en matériau élastique, l'élément de noyau (9) comprenant une portion cylindrique (9a) adaptée à être montée sur une portion diamétrale intérieure (2b) d'une bague extérieure (2) d'un dispositif formant palier (1), une portion de bride extérieure (9b) qui s'étend dans une direction diamétrale vers l'extérieur depuis une extrémité de la portion cylindrique (9aa) qui, quand le dispositif d'étanchéité pour palier est monté sur un dispositif formant palier, est positionnée sur un côté opposé à un côté vers l'espace de palier (S), et une portion de bride intérieure (9d) qui s'étend dans une direction diamétrale vers l'intérieur depuis une autre extrémité de la portion cylindrique (9ab) qui, quand le dispositif d'étanchéité pour palier est monté sur un dispositif formant palier, est positionnée sur un côté tourné vers l'espace de palier (S), l'élément formant lèvre d'étanchéité (10) comprenant une lèvre axiale (14) fixée sur l'élément de noyau (9) et en projection, quand le dispositif d'étanchéité pour palier est monté sur un dispositif formant palier, vers le côté opposé au côté vers l'espace de palier (S) depuis la portion de bride intérieure (9d),
dans lequel la portion de bride intérieure (9d) de l'élément de noyau (9) s'étend de manière à être cintrée vers un côté diamétral intérieur via une portion incurvée (9c) depuis l'autre extrémité de la portion cylindrique (9ab),
**caractérisé en ce que**
la portion incurvée (9c) est pourvue d'une portion en projection (15) réalisée en matériau élastique et s'étendant, quand le dispositif d'étanchéité pour palier est monté sur un dispositif formant palier, jusque dans le côté de l'espace de palier (S),
et **en ce que** la portion en projection (15) est adaptée pour fonctionner de manière telle que, quand une pluralité de dispositifs d'étanchéité pour palier (8) sont empilés concentriquement dans une direction axiale, la portion en projection (15) vient buter sur un dispositif d'étanchéité pour palier (8) adjacent, et le dispositif d'étanchéité pour palier (8) et le
dispositif d'étanchéité pour palier (8) adjacent ne sont pas en contact l'un avec l'autre à une région autre qu'une région d'aboutement (11d) de l'élément formant lèvre d'étanchéité (10) du dispositif d'étanchéité pour palier adjacent (8),
dans lequel la portion en projection (15) comprend une portion dressée de base (15a) dont une section transversale sensiblement une forme trapézoïdale, et une portion d'extrémité en projection plate (15b) correspondant à une portion du côté supérieur de la forme trapézoïdale.

2. Dispositif d'étanchéité pour palier (8) selon la revendication 1, **caractérisé en ce que** la portion d'extrémité en projection (15b) est dotée d'une petite projection (15c).

3. Dispositif d'étanchéité pour palier (8)
selon l'une quelconque des revendications 1 et 2,
**caractérisé en ce qu'**une section du côté diamétral intérieur de la portion incurvée (9ca) de la portion de bride intérieure (9d) est formée à une position qui recouvre la portion cylindrique (9a) dans une direction diamétrale.

4. Dispositif d'étanchéité pour palier (8)
selon l'une quelconque des revendications 1 à 3,
**caractérisé en ce qu'**une face de la portion de bride intérieure sur le côté opposé au côté vers l'espace de palier (9da) et une face diamétrale intérieure de la portion cylindrique (9ac) sont couvertes avec une portion de base de lèvre d'étanchéité (11) constituant l'élément formant lèvre d'étanchéité (10), et la lèvre axiale (14) est formée de manière à se projeter depuis la portion de base de lèvre d'étanchéité (11).

5. Dispositif d'étanchéité pour palier (8)
selon l'une quelconque des revendications 1 à 4,
**caractérisé en ce que** la portion en projection (15) est prévue en continu le long d'une direction circonférentielle de l'élément de noyau (9).

6. Dispositif d'étanchéité pour palier (8)
selon l'une quelconque des revendications 1 à 4,
**caractérisé en ce que** la portion en projection (15) est prévue de façon intermittente le long de la direction circonférentielle de l'élément de noyau (9).

7. Dispositif d'étanchéité pour palier (8)
selon l'une quelconque des revendications 1 à 6,
**caractérisé en ce que** la portion en projection (15) est prévue à une position qui chevauche la portion cylindrique (9a) dans la direction axiale.

8. Dispositif d'étanchéité pour palier (8) selon la revendication 4,
**caractérisé en ce que** la portion en projection (15) est prévue à une position qui chevauche, dans la direction axiale, la portion de base de lèvre d'étanchéité (11) qui couvre la face diamétrale intérieure de la portion cylindrique (9ac).

9. Dispositif d'étanchéité pour palier (8)
selon l'une quelconque des revendications 1 à 8,
**caractérisé en ce qu'**une face de la portion de bride intérieure du côté de l'espace de palier (9dc) est couverte avec la portion de base de lèvre d'étanchéité (11) constituant l'élément formant lèvre d'étanchéité (10), et la portion en projection (15) est formée intégralement avec la portion de base de lèvre d'étanchéité (11).

10. Dispositif d'étanchéité pour palier (8)
selon l'une quelconque des revendications 1 à 9,
**caractérisé en ce que** la portion en projection (15) est formée de manière à venir buter sur une région dans laquelle la portion de bride extérieure (9b) du dispositif d'étanchéité pour palier adjacent (8) est formée.
